# FASCICULE DE BREVET EUROPEEN

(11) **EP 3 894 784 B1**
(45) Date de publication et mention de la délivrance du brevet: **17.09.2025**
(21) Numéro de dépôt: 19813550.1
(22) Date de dépôt: 06.12.2019
(51) Int. Cl.: G01B 11/24, G01B 11/30, G01B 21/04, G01N 21/958, B25J 9/16

(54) **PROCEDE DE MESURE DES ECARTS GEOMETRIQUES ENTRE LES SURFACES INCURVEES D'UNE PLURALITE DE MATÉRIAUX À ÉVALUER ET UNE SURFACE INCURVEE D'UN MATERIAU DE REFERENCE**
VERFAHREN ZUR MESSUNG VON GEOMETRISCHEN ABWEICHUNGEN ZWISCHEN DEN GEKRÜMMTEN OBERFLÄCHEN EINER VIELZAHL VON ZU BEURTEILENDEN MATERIALIEN UND EINE GEKRÜMMTE OBERFLÄCHE EINES REFERENZMATERIALS
METHOD FOR MEASURING GEOMETRIC DISCREPANCIES BETWEEN THE CURVED SURFACES OF A PLURALITY OF MATERIALS THAT ARE TO BE EVALUATED AND A CURVED SURFACE OF A REFERENCE MATERIAL

(30) Priorité: 12.12.2018 FR 1872770
(43) Date de publication de la demande: 20.10.2021
(73) Titulaire: Saint-Gobain Sekurit France, 60150 Thourotte (FR)
(72) Inventeur: CARLU, Adrien, 80090 AMIENS (FR); MARLIER, Alexandre, 60400 PONTOISE LES NOYON (FR)
(74) Mandataire: Saint-Gobain Recherche
(86) Numéro de dépôt international: PCT/EP2019/083920
(87) Numéro de publication internationale: WO 2020/120294

(56) Documents cités:
- EP-A2- 0 453 433
- EP-A2- 1 176 388
- WO-A1-2016/052248
- DE-A1- 102006 016 677
- JP-A- H09 257 657
- US-A- 5 426 861

## Description

La présence invention concerne le domaine du contrôle des reliefs des surfaces incurvées des matériaux, en particulier des surfaces incurvées des vitrages adaptés aux moyens de transport, notamment pour l'industrie automobile.

Elle a pour objet un procédé et un système de mesure des écarts géométriques entre les surfaces incurvées d'une pluralité de matériaux à évaluer et une surface incurvée d'un matériau de référence.

Le relief et la courbure générale des surfaces des matériaux, en particulier les surfaces incurvées, peuvent constituer des critères de qualité rédhibitoires s'ils ne satisfont pas aux contraintes prévues pour leurs applications ou leurs utilisations.

Par exemple, dans l'industrie verrière, la fabrication des vitrages pour des applications dans le domaine des moyens de transport comme les véhicules automobiles comprend souvent une étape de mise en forme de feuilles de verre minérale afin de leur conférer une certaine courbure. Cette courbure, dont les rayons de courbure peuvent varier tout le long de la surface de la feuille de verre, est nécessaire afin que le vitrage formé par les feuilles de verre soit apte à être fixé ou inséré sur ou dans l'armature du véhicule. Cela participe, entre autres, à l'esthétique générale recherchée par le constructeur de véhicule, aux performances mécaniques, thermiques et acoustiques des zones de fixation et d'insertion du vitrage dans l'armature ainsi qu'aux performances optiques du vitrage selon qu'il est utilisé comme parebrise ou vitrage latéral.

Les clients, tels que les constructeurs de véhicules, les intégrateurs et/ou les transformateurs, définissent ainsi des cahiers des charges strictes sur les tolérances acceptables pour l'état de surface des vitrages quant à leur relief et/ou à la géométrie de leur courbure. Généralement, un vitrage modèle, physique ou numérique, est établi pour l'application particulière sur un véhicule, par exemple un parebrise, et sur lequel sont définis des points de contrôle. Ces points de contrôles peuvent correspondre à des zones de fixation sur l'armature du véhicule ou encore des zones de vision pour le conducteur et/ou les passagers.

Idéalement aucun défaut de relief ou de géométrie de surface ne doit être présent en ces points de contrôle, tout au plus les caractéristiques du défaut doivent être dans les tolérances acceptables par le ou les clients. Dans tous les cas, un défaut s'il est présent, ne doit pas être susceptible de gêner la fixation du vitrage sur le véhicule ni être susceptible de réduire le confort visuel du conducteur ou de gêner la conduite du véhicule. De même, si le vitrage est utilisé dans un dispositif d'affichage numérique tel qu'un écran à plasma ou un écran à cristaux liquides ou comprend un tel dispositif aucun défaut ne doit perturber l'affichage.

De nombreuses méthodes de contrôle de la qualité des vitrages ont été développées de manière à pouvoir isoler et élimer ceux dont les caractéristiques optiques sont impropres à l'usage auquel ils sont destinés. Ces méthodes sont souvent implémentées pendant ou après fabrication. Elles sont décrites en détail dans l'état de la technique.

Par exemple, les demandes de brevets ou brevets EP1176388A2, US5426861, DE102006016677, WO2016052248, JP09257657 et EP453433A2 expose des méthodes générales de mesure sur des matériaux. Les brevets EP 0463940 B et EP 0342127 B décrivent des procédés automatisables de contrôle optique d'un vitrage dans lequel les niveaux de déformation optique du vitrage sont déterminés à partir d'une image ombroscopique puis comparés à des valeurs seuils préalablement définies. Les demandes de brevets WO 98/17993 et GB 2152210 ainsi que le brevet EP 1061357 B divulguent des procédés de détection des anomalies optiques d'une feuille transparente par analyse de l'image d'un motif géométrique réfléchi ou transmis par la feuille.

Toutefois, ces méthodes ne permettent pas d'isoler les vitrages dont les feuilles de verre présentent, en surface, des écarts géométriques de relief ou de courbure avec la surface d'un vitrage modèle.

Il existe également des dispositifs ou méthodes avec contact qui permettent de déterminer si les contours d'un article, tel qu'une feuille de verre, correspondent à ceux d'un gabarit. Par exemple, la demande US 3733704 A décrit un support dont la périphérie est dotée d'une pluralité de potentiomètres palpeurs, et sur lequel un objet est disposé de sorte que les potentiomètres palpeurs en déterminent le contour. La demande US 4221053 A décrit un dispositif ayant la forme recherchée pour la feuille de verre à examiner et dont la périphérie est dotée d'une pluralité de potentiomètres palpeurs. Une feuille de verre est disposée sous le dispositif de sorte que les potentiomètres palpeurs, en entrant contact avec la surface de la feuille de verre, en déterminent le contour pour vérifier qu'il correspond à celui du dispositif. La demande US 4679331 A divulgue un dispositif comprenant un bras articulé sur lequel est fixé un seul potentiomètre palpeur. Le bras articulé se déplace en certains points situés sur la périphérie d'une feuille de verre placée sur gabarit et met en contact le potentiomètre palpeur avec la surface de la feuille de verre. Une différence d'épaisseur entre la surface du verre et la surface du gabarit est calculée. Cette différence indique si le contour de feuille de verre correspond à celui du gabarit.

Ces méthodes et dispositifs avec contact présentent plusieurs inconvénients. Tout d'abord, ils nécessitent, pour chaque forme de feuille de verre, un gabarit adapté et conçu spécifiquement. Dans un contexte industriel où une certaine flexibilité et une certaine réactivité sont requises au regard des évolutions rapides des besoins techniques des clients, cela engendre des délais et des coûts supplémentaires liés notamment au développement d'un gabarit pour chaque forme et pour sa maintenance. Cela engendre également des risques de dégradation, telle que rayure ou éraflure, et/ou de pollution des surfaces des feuilles de verre, surtout lorsque les gabarits et les moyens de détection de surface par contact se dégradent sous l'effet de leur usure naturelle. Ensuite, l'utilisation de moyen de détection de la surface par contact, tels que les potentiomètres palpeurs, est inadaptée pour certains articles. Le cas particulier des vitrages comprenant un verre minéral mince, d'une épaisseur généralement comprise entre 0,4mm et 1,5mm, est particulièrement illustratif. En raison de sa faible épaisseur, le verre mince est sensible à toute contrainte mécanique de surface. Il peut en résulter des déformations optiques rédhibitoires pour certaines applications. Les moyens de détection de surface par contact sont donc à éviter. Enfin, ces dispositifs et méthodes avec contact sont inadaptés pour la mesure des écarts géométriques en tout point d'une surface dans un temps compatible avec le rythme d'une ligne de production. La mesure des écarts géométriques en tout point à l'aide de ces dispositifs et méthodes avec contact est lente. L'exploration de toute une surface est trop longue pour qu'ils puissent être incorporés efficacement sur une ligne de production en continue à haute cadence.

La présente invention résout ces problèmes. Elle a pour objet un procédé automatisé de mesure des écarts géométriques de courbure entre les surfaces incurvées d'une pluralité de matériaux à évaluer et une surface incurvée d'un matériau de référence selon la revendication 1.

L'invention a également pour objet un système permettant de mettre en œuvre le procédé de l'invention selon la revendication 11.
[Fig.1] est une représentation schématique d'un mode de réalisation d'un procédé et d'un système selon l'invention.
[Fig.2] est une représentation graphique d'un exemple de trajectoire définie pour la mesure des écarts optiques selon le procédé de l'invention.
[Fig.3] est une représentation schématique d'une ligne de fabrication intégrant un procédé et un système selon l'invention.
[Fig.4] est une représentation schématique d'un deuxième mode de réalisation d'un procédé selon l'invention
[Fig.5] est une représentation schématique d'un troisième mode de réalisation d'un procédé selon l'invention.

Dans la suite du texte, il fait référence aux éléments des figures dans leurs différentes vues.

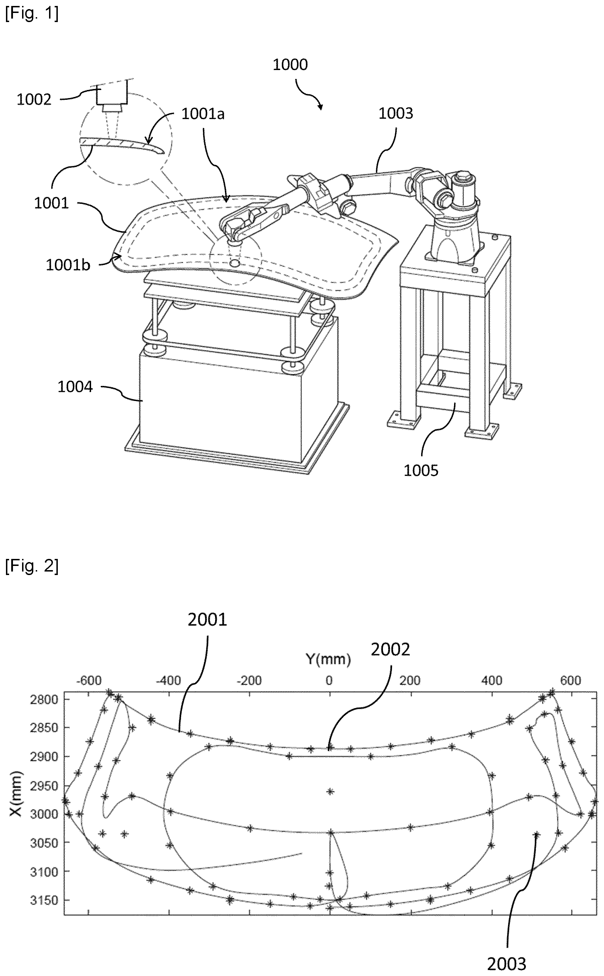

La Figure 1 représente un mode de réalisation d'un procédé selon l'invention.

Le procédé selon l'invention est un procédé automatisé 1000 de mesure des écarts géométriques de courbure entre les surfaces incurvées 1001a d'une pluralité de matériaux 1001 à évaluer et une surface incurvée 1001a d'un matériau 1001 de référence (non représenté). A des fins de simplification des figures, les matériaux à évaluer et le matériau de référence sont représentés par un même élément 1001 sur les figures.

Le procédé comprend les étapes suivantes :
(a) la mesure, en des points de mesure sélectionnés le long d'une trajectoire 1001b définie, du profil de courbure de la surface incurvée 1001a du matériau 1001 de référence à l'aide d'un moyen 1002 de détection sans contact, ledit moyen 1002 de détection sans contact étant disposé sur un moyen automatique 1003 de déplacement parcourant ladite trajectoire 1001b de manière synchrone avec la mesure de la courbure par le moyen 1002 de détection sans contact ;
(b) la mesure du profil de courbure de la surface incurvée 1001a de chaque matériau 1001 à évaluer, aux mêmes points de mesure sélectionnés le long de la même trajectoire 1001b, dans les mêmes conditions de parcours de ladite trajectoire 1001b par le moyen automatique 1003 de déplacement et selon le même angle d'acquisition par le moyen 1002 de détection sans contact au même point de mesure que pour la surface incurvée 1001a du matériau de référence lors de l'étape (a) ;
(c) le calcul, mise en œuvre par ordinateur (non représenté), aux points sélectionnés, de la différence entre les profils de courbure de la surface incurvée 1001a de chaque matériau 1001 d'évaluation obtenus à l'étape (b) et le profil de courbure de la surface incurvée 1001a du matériau 1001 de référence obtenu à l'étape (a).

L'angle de l'axe d'acquisition du moyen 1002 de détection sans contact peut être avantageusement compris entre 0 et 40°, de préférence entre 0 et 20°, par rapport à la normale à ladite surface incurvée au point de mesure. Un tel angle peut permettre, par exemple, d'éviter les artefacts de mesure qui peuvent apparaitre lorsqu'une zone trop importante des surfaces incurvées fait l'objet d'une mesure par le moyen 1002 de détection sans contact.

Le moyen automatique de déplacement peut être disposé sur un support fixe 1005 adapté et situé de manière à lui permettre d'atteindre tout ou partie des points des surfaces incurvées des matériaux à évaluer et du matériau de référence. Le support peut également être un support mobile. De même les matériaux à évaluer et le matériau de référence peuvent être disposés sur un support fixe 1004. Le support 1004 peut également être mobile. Tel est le cas, par exemple, d'un convoyeur qui achemine lesdits matériaux et qui est temporairement immobilisé le temps de réaliser une mesure des écarts géométriques selon le procédé de l'invention.

Dans certaines applications, les caractéristiques requises ou les tolérances acceptables quant à la courbure de la surface incurvée des matériaux peuvent varier. Par exemple, dans le cas d'un vitrage pour des applications sur véhicule de transport, les tolérances acceptables quant à la courbure dans les zones du vitrage destinées à être fixées sur l'armature du véhicule peuvent être différentes de celles des zones destinées à servir de zones de vision au conducteur du véhicule.

En ce sens, dans un mode de réalisation du procédé selon l'invention, ledit procédé peut comprendre en outre, après l'étape (c), une étape (d) de comparaison, en des points de mesure sélectionnés, des valeurs des différences calculées lors de l'étape (c) avec des valeurs de tolérance préalablement définies en chacun desdits points. Les points de mesures sélectionnés peuvent être aussi bien être quelques points le long de la trajectoire, l'ensemble des points formant la trajectoire et comprendre des points de mesure en dehors de ladite trajectoire.

A titre d'exemple, la Figure 2 représente, une vue de dessus, une surface incurvée 1001a d'un matériau 1001 de référence ou à évaluer. Sur cette surface est représenté un exemple de trajectoire 2001 que la méthode selon l'invention permet de configurer et parcourir pour la mesure du profil de courbure de la surface incurvé 1001a. Des points de mesures 2002, 2003 peuvent être sélectionnés sur la trajectoire 2001 ou dehors. Cette figure illustre la flexibilité de la méthode de l'invention en ce qu'elle permet d'adapter les trajectoires 1001b et points de mesure selon le type de matériau et son utilisation et d'en comparer les valeurs de courbure avec des valeurs de tolérance définies pour chacun de ces points.

Aujourd'hui, la plupart des moyens automatiques 1003 de déplacement et des moyens 1002 de détection sans contact sont contrôles et interfacés à l'aide de systèmes informatiques comprenant des moyens de calcul capables de traiter des instructions pour les faire fonctionner. Lorsque de tels systèmes sont utilisés, la trajectoire 1001b le long de laquelle est mesuré le profil de courbure des surfaces incurvées 1001a peut être avantageusement définie à l'aide d'un modèle numérique de la surface incurvée de référence. Un tel modèle peut, par exemple, être réalisé à l'aide d'un logiciel de conception assisté par ordinateur.

Le procédé selon l'invention implique l'utilisation des coordonnées spatiales des points de la trajectoire 1001b le long de laquelle la mesure de la courbure est réalisée. Ces coordonnés peuvent être définies selon un repère de référence situé dans l'espace de la trajectoire 1001b susceptible d'être parcourue le long des surfaces incurvées 1001a des matériaux ou dans le repère de référence de l'ensemble formé par le moyen automatique de déplacement et le moyen de détection sans contact. Le repère de référence de l'ensemble formé par le moyen automatique 1003 de déplacement et le moyen 1002 de détection sans contact est généralement le repère de référence du moyen 1003 automatique de déplacement.

En général, les moyens automatiques 1003 de déplacement sont contrôlés à l'aide d'un ou plusieurs dispositifs de contrôle auxquels des instructions sont communiquées afin de faire déplacer ces moyens automatiques selon une trajectoire 1001b définie. Les coordonnées spatiales de cette trajectoire 1001b sont alors souvent définies dans les repères de référence propres aux moyens automatiques 1003 de déplacement. Or, dans la pratique, et notamment dans un site de production, les coordonnées spatiales de la trajectoire 1001b, le long de laquelle la mesure de la courbure des surfaces incurvées 1001a est réalisée, sont définies dans un autre repère de référence extérieur, tel que celui du site de production ou celui d'un procédé ou dispositif de fabrication. Il est donc, dans ces cas de figure, avantageux de calibrer les déplacements de l'ensemble formé le moyen automatique 1003 de déplacement et le moyen 1002 de détection sans contact dans le repère de référence extérieur afin d'assurer que ledit ensemble parcoure la bonne trajectoire 1001b et que ce parcours est reproductible.

En ce sens, il peut être avantageux que le procédé de l'invention comprenne en outre, avant l'étape (a), une étape (a') de calibration de la reproductibilité des positionnements spatiaux de l'ensemble formé par le moyen automatique 1003 de déplacement et le moyen 1002 de détection sans contact dans l'espace de la trajectoire susceptible d'être parcourue à l'étape (a), ladite étape (a') comprenant les sous-étapes suivantes :
(a'1) la définition d'une pluralité de points de calibration de coordonnées spatiales connues dans un premier repère de référence dans l'espace comprenant la trajectoire 1001b susceptible d'être parcourue à l'étape (a) ;
(a'2) l'acquisition par l'ensemble formé par le moyen automatique 1003 de déplacement et le moyen 1002 de détection sans contact des coordonnées spatiales desdits points de la calibration dans le repère de référence dudit ensemble formé par le moyen automatique 1003 de déplacement et le moyen 1002 de détection sans contact ;
(a'3) le calcul, mise en œuvre par ordinateur, de la fonction de corrélation statistique entre les coordonnées spatiales obtenues à l'étape (a'1) et les coordonnées spatiales obtenues à l'étape (a'2) ;
(a'4) l'implémentation de la fonction de corrélation statistique dans un dispositif de contrôle des mouvements dudit ensemble formé par le moyen automatique de déplacement et le moyen de détection sans contact.

La fonction de corrélation statistique peut être une fonction de régression linéaire ou multilinéaire. Elle peut également être calculée à l'aide d'un algorithme d'apprentissage statistique. En particulier, le calcul de la fonction de corrélation statistique est réalisé à l'aide d'une méthode de régression des moindres carrés.

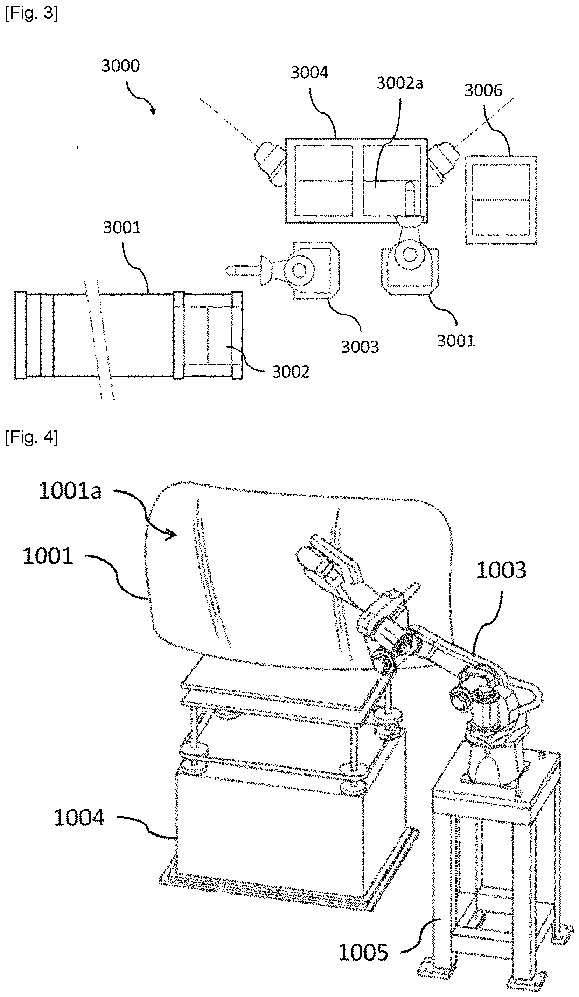

Le procédé selon l'invention peut être intégré à un procédé de fabrication en continu de matériaux. Les étapes (b) et (c) du procédé peuvent alors être exécutées successivement et continument sur les surfaces incurvées des matériaux La Figure 3 représente un exemple de ligne de fabrication dans laquelle le procédé de l'invention est intégré. La ligne 3000 comprend un convoyeur 3001 sur lequel sont convoyées des feuilles de verre 3002 provenant dans procédé de la fabrication (non représenté). Les feuilles de verre 3002 possédant une surface incurvée sont déplacées jusqu'à un premier automate 3003 disposant de moyen de préhension de manière à transporter une feuille de verre 3002a sur un support fixe 3004. Un système 3005 comprenant un moyen automatique de déplacement sur lequel est fixé un moyen de détection sans contact met en œuvre le procédé de l'invention. La mesure, en des points de mesure sélectionnés le long d'une trajectoire définie, du profil de la courbure de la surface incurvée d'une feuille de verre de référence a été préalablement réalisée.

Si les écarts géométriques de courbure entre les surfaces incurvées de la feuille de verre 3002a et la surface incurvée de la feuille de verre de référence ne satisfont pas aux critères recherchés, celle-là est déclassée ou mise au rebut sur un support 3006 prévu à cet effet. S'ils sont satisfaisants, la feuille de verre 3002a est conservée et empilée sur un support (non représenté) prévu à cet effet, en préparation, par exemple, à son expédition au client. Chaque feuille de verre 3002 amenée par le convoyeur 3001 est successivement traitée ainsi.

Dans le procédé selon l'invention, les matériaux à évaluer et le matériau de référence, et par conséquent leurs surfaces incurvées respectives, être disposé horizontalement ou avec une certaine inclinaison. La Figure 4 est une représentation schématique du procédé de l'invention dans lequel le vitrage 1001 est incliné.

En particulier, les surfaces incurvées 1001b des matériaux 1001 d'évaluation et du matériau 1001 de référence peuvent être spatialement orientées selon des angles d'inclinaison correspondant à ceux susceptibles d'être prévus lors de leur utilisation. Une telle disposition peut, par exemple, permettre de tenir compte des déformations mécaniques du matériau et de sa surface incurvée qui peuvent potentiellement se former dans les conditions de son utilisation.

A titre d'exemple, un vitrage feuilleté en verre minéral, tel qu'un parebrise pour véhicule de transport, n'est généralement pas disposé horizontalement sur le véhicule mais présente une certaine inclinaison par rapport à la verticale. D'autre part, ce vitrage est généralement fixé à l'armature de véhicule par sa périphérie. Une telle configuration est susceptible d'engendrer une déformation de la courbure sa surface surtout s'il est de grande dimension et assez mince. Le procédé de l'invention peut permettre, dans la mesure des écarts géométriques, de tenir compte de cette déformation de la courbure en disposant le vitrage selon une orientation spatiale selon l'angle d'inclinaison correspondant à son utilisation. Il est également possible de le disposer sur un support simulant ces conditions de fixation à l'armature du véhicule.

Le moyen 1002 de détection sans contact peut être un capteur confocal chromatique. Le fonctionnement des capteurs confocaux chromatiques reposent sur une division d'un faisceau électromagnétique en différentes longueurs d'onde en fonction de la distance par rapport à l'objectif de sortie dudit faisceau. Ils permettent de mesurer la hauteur des reliefs d'une surface avec une résolution latérale élevée. L'utilisation d'un capteur confocal chromatique, en particulier un capteur confocal chromatique numérique, peut être avantageuse par le fait que ce type de capteur permet une mesure sans contact avec une fréquence d'acquisition et une résolution compatible avec un moyen automatique de déplacement pouvant avoir des vitesses de déplacement élevées. Ce type de capteur est également particulièrement adapté aux matériaux transparents, tels que les feuilles de verre minéral, pour lesquels les capteurs optiques requérant des surfaces réfléchissantes ou opaques pour fonctionner sont peu satisfaisants.

Le moyen automatique 1003 de déplacement peut être un bras automate articulé doté de six degrés de liberté. L'utilisation d'un tel bras a pour avantage d'assurer la reproductibilité du parcours d'une trajectoire le long des surfaces incurvées, et de limiter les variations de la hauteur du moyen de détection par rapport à la surface incurvée, notamment dans les zones de forte courbure.

Le procédé de l'invention est particulièrement adapté à la mesure des écarts de courbure entre les surfaces incurvées 1001a d'une pluralité de matériaux 1001 transparents à évaluer et une surface incurvée 1001a d'un matériau 1001 transparent de référence. Plus précisément, il est adapté au contrôle de qualité des surfaces incurvées des feuilles de verre en sortie de production ou après leur mise en forme, par exemple par bombage. En ce sens, les matériaux de référence et le matériau d'évaluation sont respectivement une feuille de verre de référence et des feuilles de verre d'évaluation. Egalement, la feuille de verre de référence et les feuilles de verre d'évaluation peuvent être susceptibles d'être constitutives des feuilles de verre d'un vitrage de référence pour un moyen de transport et de vitrages d'évaluation pour le même moyen de transport respectivement.

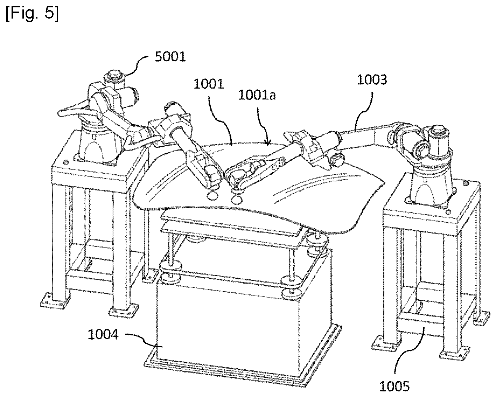

Dans un mode de réalisation, illustré sur la figure 5, le procédé de l'invention comprend un deuxième ensemble comprenant un deuxième moyen automatique 5001 de déplacement sur lequel est fixé un deuxième moyen de détection sans contact (non représenté). Ce deuxième ensemble peut fonctionner simultanément avec le premier ensemble comprenant le premier moyen automatique 1003 de déplacement et le premier moyen 1002 de détection sans contact dans l'exécution des étapes (a) et (b) du procédé de l'invention. Un premier avantage est une exécution plus rapide de procédé de l'invention. Un deuxième avantage est qu'il est possible de mesurer des écarts géométriques de courbure sur des surfaces incurvées 1001a de grande dimension pour lesquelles un seul moyen automatique de déplacement peut être inadapté. Un troisième avantage est que les premier et deuxième ensembles peuvent avoir un encombrement spatial réduit et, ainsi adapté pour les sites où il y a peu d'espace.

L'invention a également pour objet un système pour la mise en œuvre du procédé selon l'invention. Le système est un système automatique de mesure des écarts géométriques de courbure entre les surfaces incurvées 1001a d'une pluralité de matériaux 1001 à évaluer et une surface incurvée 1001a d'un matériau 1001 de référence, le matériau de référence et les matériaux à mesurer étant respectivement une feuille de verre de référence et des feuilles de verre d'évaluation, ledit système comprenant un ensemble formé par
- au moins un moyen automatique 1003 de déplacement adapté pour le parcours d'au moins une trajectoire 1001b définie le long des surfaces incurvées 1001a, et
- au moins un moyen 1002 de détection sans contact adapté à la mesure de la courbure de surfaces incurvées 1001a, disposé sur le moyen automatique 1003 de déplacement et synchronisé avec les mouvements dudit moyen automatique 1003 de déplacement ;
ledit système étant configuré pour :
- mesurer, en des points de mesure sélectionnés le long d'une trajectoire 1001b définie, du profil de courbure de la surface incurvée 1001a du matériau 1001 de référence, et
- mesurer le profil de courbure de la surface incurvée 1001a de chaque matériau 1001 à évaluer, aux mêmes points de mesure sélectionnés le long de la même trajectoire 1001b, dans les mêmes conditions de parcours de ladite trajectoire 1001b par le moyen automatique 1003 de déplacement et selon le même angle d'acquisition par le moyen 1002 de détection sans contact au même point de mesure que pour la surface incurvée 1001a du matériau 1001 de référence.

Le système selon l'invention comprend en outre une unité de calcul configurée pour le calcul, aux points sélectionnés, de la différence entre les profils de courbure des surfaces incurvées 1001a de chaque matériau 1001 d'évaluation et le profil de courbure de la surface incurvée 1001a du matériau 1001 de référence.

Le moyen 1002 de détection sans contact est fixé sur le moyen automatique 2003 de déplacement à l'aide d'un moyen de fixation. Tout moyen de fixation adapté peut être utilisé. De préférence, le moyen de fixation peut posséder une conductivité thermique permettant d'évacuer la chaleur liée à un échauffement du capteur sans contact. Un tel échauffement est en effet susceptible de perturber son fonctionnement, notamment, lorsqu'il s'agit d'un moyen de détection électronique, par l'apparition d'un bruit électronique perturbant son signal. Un tel échauffement peut, par exemple, être provoqué par une utilisation prolongée du moyen de détection sans contact. Le moyen de fixation peut avantageusement posséder une conductivité thermique supérieure à 100 W.K⁻¹.m⁻¹, de préférence supérieure à 200 W.K¹.m⁻¹. Un exemple de matériau adéquat pour le moyen de fixation est l'aluminium.

Le moyen automatique 1003 de déplacement peut être un bras automate articulé doté de six degrés de libertés. L'utilisation d'un tel bras articulé est avantageuse en ce qu'il est suffisamment flexible pour s'adapter à tout type et tout degré de courbure des surfaces incurvées. Le positionnement du moyen de détection sans contact vis-à-vis des surfaces incurvées est facilité.

Le moyen de détection sans contact du système selon l'invention est un capteur confocal chromatique.

Afin de permettre une orientation spatiale des surfaces incurvées selon des angles d'inclinaison correspondant à ceux susceptibles d'être prévus lors de leur utilisation, le système peut avantageusement comprendre outre un support des matériaux d'évaluation et du matériau de référence de sorte que les surfaces incurvées des matériaux d'évaluation et du matériau de référence sont spatialement orientées selon des angles d'inclinaison correspondant à ceux susceptible d'être prévus lors de leur utilisation.

Le procédé et le système selon l'invention procurent les avantages suivants :
- ils peuvent être utilisés pour le contrôle de la qualité de la courbure des surfaces incurvées de matériaux sensibles à toute contrainte mécanique de surface ;
- ils peuvent être intégrés à des lignes de fabrication, de conception ou d'assemblage continu ;
- le contrôle de la qualité de la courbure des surfaces incurvées d'une pluralité de matériaux à évaluer est automatisé et peut être réalisé sur tout le long de toute trajectoire ou en certains points définis de cette trajectoire ;
- la trajectoire le long de laquelle est contrôlée la qualité de la courbure peut être adapté selon le type des matériaux et leur utilisation ;
- aucun gabarit, tel que ceux décrits dans l'art antérieur, n'est requis pour réaliser le contrôle de qualité de la courbure des surfaces incurvées ;
- les risques de dégradation et/ou de pollution des surfaces incurvées sont éliminés.

## Revendications

1. Procédé automatisé (1000) de mesure des écarts géométriques de courbure entre les surfaces incurvées (1001a) d'une pluralité de matériaux (1001) à évaluer et une surface incurvée d'un matériau (1001) de référence, le matériau (1001) de référence et les matériaux (1001) à mesurer étant respectivement une feuille de verre de référence et des feuilles de verre d'évaluation, le dit procédé comprenant les étapes suivantes :
(a) la mesure, en des points de mesure sélectionnés le long d'une trajectoire (1001b) définie, du profil de courbure de la surface incurvée (1001a) du matériau (1001) de référence à l'aide d'un moyen (1002) de détection sans contact, ledit moyen (1002) de détection sans contact étant disposé sur un moyen automatique (1003) de déplacement parcourant ladite trajectoire de manière synchrone avec la mesure du profil de courbure par le moyen (1002) de détection sans contact ;
(b) la mesure du profil de courbure de la surface incurvée (1001a) de chaque matériau (1001) à évaluer, aux mêmes points de mesure sélectionnés le long de la même trajectoire (1001b), dans les mêmes conditions de parcours de ladite trajectoire (1001b) par le moyen automatique (1003) de déplacement et selon le même angle d'acquisition par le moyen (1002) de détection sans contact au même point de mesure que pour la surface incurvée (1001a) du matériau (1001) de référence lors de l'étape (a) ;
(c) le calcul, mise en œuvre par ordinateur, aux points sélectionnés, de la différence entre les profils de courbure de la surface incurvée (1001a) de chaque matériau (1001) à évaluer obtenus à l'étape (b) et le profil de courbure de la surface incurvée (1001a) du matériau (1001) de référence obtenu à l'étape (a).

2. Procédé automatisé de mesure des écarts géométriques de de courbure entre les surfaces incurvées (1001a) d'une pluralité de matériaux (1001) à évaluer et une surface incurvée (1001a) d'un matériau (1001) de référence selon la revendication 1, tel qu'il comprend en outre, après l'étape (c), une étape (d) de comparaison, en des points de mesure sélectionnés, des valeurs des différences calculées lors de l'étape (c) avec des valeurs de tolérance préalablement définies en chacun desdits points.

3. Procédé automatisé de mesure des écarts géométriques de courbure entre les surfaces incurvées (1001a) d'une pluralité de matériaux (1001) à évaluer et une surface incurvée (1001a) d'un matériau (1001) de référence selon l'une des revendications 1 à 2, tel qu'il comprend en outre, avant l'étape (a), une étape (a') de calibration de la reproductibilité des positionnements spatiaux de l'ensemble formé par le moyen automatique (1003) de déplacement et le moyen de détection (1002) sans contact dans l'espace de la trajectoire (1001a) susceptible d'être parcourue à l'étape (a), ladite étape (a') comprenant les sous-étapes suivantes :
(a'1) la définition d'une pluralité de points de calibration de coordonnées spatiales connues dans un premier repère de référence dans l'espace de la trajectoire (1001a) susceptible d'être parcourue à l'étape (a) ;
(a'2) l'acquisition par l'ensemble formé par le moyen automatique (1003) de déplacement et le moyen (1002) de détection sans contact des coordonnées spatiales desdits points de la calibration dans le repère de référence dudit ensemble formé par le moyen automatique (1003) de déplacement et le moyen (1002) de détection sans contact ;
(a'3) le calcul, mise en œuvre par ordinateur, de la fonction de corrélation statistique entre les coordonnées spatiales obtenues à l'étape (a'1) et les coordonnées spatiales obtenues à l'étape (a'2) ;
(a'4) l'implémentation de la fonction de corrélation statistique dans un dispositif de contrôle des mouvements dudit ensemble formé par le moyen automatique (1003) de déplacement et le moyen (1002) de détection sans contact.

4. Procédé automatisé de mesure des écarts géométriques de courbure entre les surfaces incurvées (1001a) d'une pluralité de matériaux (1001) à évaluer et une surface incurvée (1001a) d'un matériau de référence (1001) selon la revendication 3, tel que le calcul de fonction de corrélation statistique est réalisé à l'aide d'une méthode de régression des moindres carrés.

5. Procédé automatisé de mesure des écarts géométriques de courbure entre les surfaces incurvées (1001a) d'une pluralité de matériaux (1001) à évaluer et une surface incurvée (1001a) d'un matériau (1001) de référence selon l'une des revendications 1 à 4, tel que les étapes (b) et (c) sont exécutées successivement et continument sur les surfaces incurvées des matériaux.

6. Procédé automatisé de mesure des écarts géométriques de courbure entre les surfaces incurvées (1001a) d'une pluralité de matériaux (1001) à évaluer et une surface incurvée (1001a) d'un matériau (1001) de référence selon l'une des revendications 1 à 5, tel que la trajectoire (1001b) est définie à l'aide d'un modèle numérique de la surface incurvée de référence.

7. Procédé automatisé de mesure des écarts géométriques de courbure entre les surfaces incurvées (1001a) d'une pluralité de matériaux (1001) à évaluer et une surface incurvée (1001a) d'un matériau (1001) de référence selon l'une des revendications 1 à 6, tel que les surfaces incurvées (1001a) des matériaux (1001) d'évaluation et du matériau (1001) de référence sont spatialement orientées selon des angles d'inclinaison correspondant à ceux susceptibles d'être prévus lors de leur utilisation.

8. Procédé automatisé de mesure des écarts géométriques de courbure entre les surfaces incurvées (1001a) d'une pluralité de matériaux (1001) à évaluer et une surface incurvée (1001a) d'un matériau (1001) de référence selon l'une des revendications 1 à 7, tel que le moyen (1002) de détection sans contact est un capteur confocal chromatique.

9. Procédé automatisé de mesure des écarts géométriques de courbure entre les surfaces incurvées (1001a) d'une pluralité de matériaux (1001) à évaluer et une surface incurvée (1001a) d'un matériau (1001) de référence selon l'une des revendications 1 à 8, tel que le moyen automatique (1003) de déplacement est un bras automate articulé doté de six degrés de liberté.

10. Procédé automatisé de mesures des écarts géométriques de courbure entre les surface incurvées (1001a) d'une pluralité de matériaux (1001) à évaluer et une surface incurvée (1001a) d'un matériau (1001) de référence selon la revendication 1, tel que la feuille de verre de référence et les feuilles de verre d'évaluation sont susceptibles d'être constitutives des feuilles de verre d'un vitrage de référence pour un moyen de transport et de vitrages d'évaluation pour le même moyen de transport respectivement.

11. Système automatique de mesure des écarts géométriques de courbure entre les surfaces incurvées (1001a) d'une pluralité de matériaux (1001) à évaluer et une surface incurvée (1001a) d'un matériau (1001) de référence, le matériau (1001) de référence et les matériaux (1001) à mesurer étant respectivement une feuille de verre de référence et des feuilles de verre d'évaluation, ledit système comprenant un ensemble formé par
- au moins un moyen automatique (1003) de déplacement adapté pour le parcours d'au moins une trajectoire (1001b) définie le long des surfaces incurvées (1001a), et
- au moins un moyen (1002) de détection sans contact adapté à la mesure de courbure de surfaces incurvées (1001a), disposé sur le moyen automatique (1003) de déplacement et synchronisé avec les mouvements dudit moyen automatique (1003) de déplacement, le moyen (1002) de détection sans contact étant un capteur confocal chromatique ;
ledit système étant configuré pour :
- mesurer, en des points de mesure sélectionnés le long d'une trajectoire définie (1001b), du profil de courbure de la surface incurvée (1001) du matériau de référence, et
- mesurer le profil de courbure de la surface incurvée (1001a) de chaque matériau (1001) à évaluer, aux mêmes points de mesure sélectionnés le long de la même trajectoire (1001b), dans les mêmes conditions de parcours de ladite trajectoire (1001b) par le moyen automatique (1003) de déplacement et selon le même angle d'acquisition par le moyen (1002) de détection sans contact au même point de mesure que pour la surface incurvée (1001a) du matériau (1001) de référence,
ledit système comprenant en outre une unité de calcul configurée pour le calcul, aux points sélectionnés, de la différence entre les profils de courbure des surfaces incurvées (1001a) de chaque matériau (1001) d'évaluation et le profil de courbure de la surface incurvée (1001a) du matériau de référence.

12. Système automatique de mesure des écarts géométriques de courbure entre les surfaces incurvées (1001a) d'une pluralité de matériaux (1001) à évaluer et une surface incurvée (1001a) d'un matériau de référence selon la revendication 11, tel que le moyen (1002) de détection sans contact est disposé sur le moyen automatique (1003) de déplacement à l'aide d'un moyen de fixation possédant une conductivité thermique supérieure à 100 W.K⁻¹.m⁻¹, de préférence supérieure à 200 W.K⁻¹.m⁻¹.

13. Système automatique de mesure des écarts géométriques de courbure entre les surfaces incurvées (1001a) d'une pluralité de matériaux (1002) à évaluer et une surface incurvée (1001a) d'un matériau (1001) de référence selon l'une quelconque des revendications 11 à 12, tel que le moyen automatique (1003) de déplacement est un bras automate articulé doté de six degrés de libertés.

14. Système automatique de mesure des écarts géométriques de courbure entre les surfaces incurvées (1001a) d'une pluralité de matériaux (1001) à évaluer et une surface incurvée (1001a) d'un matériau (1001) de référence selon l'une quelconque des revendications 11 à 13, tel qu'il comprend en outre un support des matériaux (1001) d'évaluation et du matériau (1001) de référence de sorte que les surfaces incurvées (1001a) des matériaux (1001) d'évaluation et du matériau (1001) de référence sont spatialement orientées selon des angles d'inclinaison correspondant à ceux susceptible d'être prévus lors de leur utilisation.

## Patentansprüche

1. Automatisiertes Verfahren (1000) zum Messen geometrischer Krümmungsabweichungen zwischen gebogenen Oberflächen (1001a) einer Vielzahl von zu bewertenden Materialien (1001) und einer gebogenen Oberfläche eines Referenzmaterials (1001), wobei das Referenzmaterial (1001) und die zu messenden Materialien (1001) jeweils eine Referenzglasscheibe und Bewertungsglasscheiben sind, das Verfahren umfassend die folgenden Schritte:
(a) Messen, an ausgewählten Messpunkten entlang eines definierten Weges (1001b), des Krümmungsprofils der gebogenen Oberfläche (1001a) des Referenzmaterials (1001) mithilfe eines berührungslosen Erkennungsmittels (1002), wobei das berührungslose Erkennungsmittel (1002) auf einem automatischen Verschiebemittel (1003) angeordnet ist, das sich synchron zu der Messung des Krümmungsprofils durch das berührungslose Erkennungsmittel (1002) entlang des Weges fortbewegt;
(b) Messen des Krümmungsprofils der gebogenen Oberfläche (1001a) jedes zu bewertenden Materials (1001) an denselben ausgewählten Messpunkten entlang desselben Weges (1001b), unter denselben Fortbewegungsbedingungen des Weges (1001b) durch das automatische Verschiebungsmittel (1003) und gemäß demselben Erfassungswinkel durch das berührungslose Erkennungsmittel (1002) an demselben Messpunkt wie für die gebogene Oberfläche (1001a) des Referenzmaterials (1001) während Schritt (a);
(c) computerimplementiertes Berechnen, an ausgewählten Punkten, der Differenz zwischen den Krümmungsprofilen der gebogenen Oberfläche (1001a) jedes zu bewertenden Materials (1001), die in Schritt (b) erhalten werden, und dem Krümmungsprofil der gebogenen Oberfläche (1001a) des Referenzmaterials (1001), das in Schritt (a) erhalten wird.

2. Automatisiertes Verfahren zum Messen geometrischer Krümmungsabweichungen zwischen den gebogenen Oberflächen (1001a) einer Vielzahl von zu bewertenden Materialien (1001) und einer gebogenen Oberfläche (1001a) eines Referenzmaterials (1001) nach Anspruch 1, so dass es ferner nach Schritt (c) einen Schritt (d) zum Vergleichen, an ausgewählten Messpunkten, von Werten der Differenzen, die während Schritt (c) berechnet werden, mit zuvor an jedem dieser Punkte definierten Toleranzwerten umfasst.

3. Automatisiertes Verfahren zum Messen geometrischer Krümmungsabweichungen zwischen den gebogenen Oberflächen (1001a) einer Vielzahl von zu bewertenden Materialien (1001) und einer gebogenen Oberfläche (1001a) eines Referenzmaterials (1001) nach einem der Ansprüche 1 bis 2, so dass es ferner vor Schritt (a) einen Schritt (a') zum Kalibrieren der Reproduzierbarkeit der räumlichen Positionierungen der Baugruppe, die durch das automatische Verschiebungsmittel (1003) und das berührungslose Erkennungsmittel (1002) ausgebildet ist, in dem Raum des Weges (1001a) umfasst, der in Schritt (a) wahrscheinlich zurückgelegt wird, der Schritt (a') umfassend die folgenden Unterschritte:
(a'1) Definieren einer Vielzahl von Kalibrierungspunkten mit bekannten räumlichen Koordinaten in einem ersten Referenzrahmen in dem Raum des Weges (1001a), der in Schritt (a) wahrscheinlich zurückgelegt wird;
(a'2) Erfassen durch die Baugruppe, die durch das automatische Verschiebungsmittel (1003) und das berührungslose Erkennungsmittel (1002) ausgebildet ist, der räumlichen Koordinaten der Kalibrierungspunkte in dem Referenzrahmen der Baugruppe, die aus dem automatischen Verschiebungsmittel (1003) und dem berührungslosen Erkennungsmittel (1002) ausgebildet ist;
(a'3) computergestütztes Berechnen der statistischen Korrelationsfunktion zwischen den Raumkoordinaten, die in Schritt (a'1) erhalten werden, und den Raumkoordinaten, die in Schritt (a'2) erhalten werden;
(a'4) Implementieren der statistischen Korrelationsfunktion in einer Vorrichtung zum Steuern der Bewegungen der Baugruppe, die aus dem automatischen Bewegungsmittel (1003) und dem berührungslosen Erkennungsmittel (1002) ausgebildet ist.

4. Automatisiertes Verfahren zum Messen geometrischer Krümmungsabweichungen zwischen gebogenen Oberflächen (1001a) einer Vielzahl von zu bewertenden Materialien (1001) und einer gebogenen Oberfläche (1001a) eines Referenzmaterials (1001) nach Anspruch 3, so dass das Berechnen der statistischen Korrelationsfunktion mithilfe einer Regressionsmethode der kleinsten Quadrate durchgeführt wird.

5. Automatisiertes Verfahren zum Messen geometrischer Krümmungsabweichungen zwischen gebogenen Oberflächen (1001a) einer Vielzahl von zu bewertenden Materialien (1001) und einer gebogenen Oberfläche (1001a) eines Referenzmaterials (1001) nach einem der Ansprüche 1 bis 4, so dass die Schritte (b) und (c) nacheinander und kontinuierlich auf den gebogenen Oberflächen der Materialien ausgeführt werden.

6. Automatisiertes Verfahren zum Messen geometrischer Krümmungsabweichungen zwischen den gebogenen Oberflächen (1001a) einer Vielzahl von zu bewertenden Materialien (1001) und einer gebogenen Oberfläche (1001a) eines Referenzmaterials (1001) nach einem der Ansprüche 1 bis 5, so dass der Weg (1001b) mithilfe eines digitalen Modells der gebogenen Referenzoberfläche definiert wird.

7. Automatisiertes Verfahren zum Messen geometrischer Krümmungsabweichungen zwischen den gebogenen Oberflächen (1001a) einer Vielzahl von zu bewertenden Materialien (1001) und einer gebogenen Oberfläche (1001a) eines Referenzmaterials (1001) nach einem der Ansprüche 1 bis 6, so dass die gebogenen Oberflächen (1001a) der Bewertungsmaterialien (1001) und des Referenzmaterials (1001) gemäß Neigungswinkeln räumlich ausgerichtet sind, die denjenigen entsprechen, die während ihrer Verwendung wahrscheinlich zu erwarten sind.

8. Automatisiertes Verfahren zum Messen geometrischer Krümmungsabweichungen zwischen den gebogenen Oberflächen (1001a) einer Vielzahl von zu bewertenden Materialien (1001) und einer gebogenen Oberfläche (1001a) eines Referenzmaterials (1001) nach einem der Ansprüche 1 bis 7, so dass das berührungslose Erkennungsmittel (1002) ein chromatischer konfokaler Sensor ist.

9. Automatisiertes Verfahren zum Messen geometrischer Krümmungsabweichungen zwischen den gebogenen Oberflächen (1001a) einer Vielzahl von zu bewertenden Materialien (1001) und einer gebogenen Oberfläche (1001a) eines Referenzmaterials (1001) nach einem der Ansprüche 1 bis 8, so dass das automatische Verschiebemittel (1003) ein automatisierter Gelenkarm ist, der über sechs Freiheitsgrade verfügt.

10. Automatisiertes Verfahren zum Messen geometrischer Krümmungsabweichungen zwischen den gebogenen Oberflächen (1001a) einer Vielzahl von zu bewertenden Materialien (1001) und einer gebogenen Oberfläche (1001a) eines Referenzmaterials (1001) nach Anspruch 1, so dass die Referenzglasscheibe und die Bewertungsglasscheiben wahrscheinlich die Glasscheiben einer Referenzverglasung für ein Verkehrsmittel und Bewertungsverglasungen für dasselbe Verkehrsmittel ausmachen.

11. Automatisches System zum Messen geometrischer Krümmungsabweichungen zwischen den gebogenen Oberflächen (1001a) einer Vielzahl von zu bewertenden Materialien (1001) und einer gebogenen Oberfläche (1001a) eines Referenzmaterials (1001), wobei das Referenzmaterial (1001) und die zu messenden Materialien (1001) jeweils eine Referenzglasscheibe und Bewertungsglasscheiben sind, das System umfassend eine Baugruppe, die ausgebildet ist durch
- mindestens ein automatisches Bewegungsmittel (1003), das für das Zurücklegen mindestens eines Weges (1001b) angepasst ist, die entlang der gebogenen Oberflächen (1001a) definiert ist, und
- mindestens ein berührungsloses Erkennungsmittel (1002), das zum Messen der Krümmung gebogener Oberflächen (1001a) angepasst ist, auf dem automatischen Verschiebungsmittel (1003) angeordnet ist und mit den Bewegungen des automatischen Verschiebungsmittels (1003) synchronisiert ist, wobei das berührungslose Erkennungsmittel (1002) ein chromatischer konfokaler Sensor ist;
das System konfiguriert ist zum:
- Messen, an ausgewählten Messpunkten entlang eines definierten Weges (1001b), des Krümmungsprofils der gebogenen Oberfläche (1001) des Referenzmaterials, und
- Messen des Krümmungsprofils der gebogenen Oberfläche (1001a) jedes zu bewertenden Materials (1001) an denselben ausgewählten Messpunkten entlang desselben Weges (1001b), unter denselben Fortbewegungsbedingungen des Weges (1001b) durch das automatische Verschiebungsmittel (1003) und gemäß demselben Erfassungswinkel durch die berührungslosen Erkennungsmittel (1002) an demselben Messpunkt wie für die gebogene Oberfläche (1001a) des Referenzmaterials (1001),
das System ferner umfassend eine Berechnungseinheit, die zum Berechnen, an ausgewählten Punkten, der Differenz zwischen den Krümmungsprofilen der gebogenen Oberflächen (1001a) jedes Bewertungsmaterials (1001) und dem Krümmungsprofil der gebogenen Oberfläche (1001a) des Referenzmaterials konfiguriert ist.

12. Automatisches System zum Messen geometrischer Krümmungsabweichungen zwischen gebogenen Oberflächen (1001a) einer Vielzahl von zu bewertenden Materialien (1001) und einer gebogenen Oberfläche (1001a) eines Referenzmaterials nach Anspruch 11, so dass das berührungslose Erkennungsmittel (1002) auf dem automatischen Verschiebungsmittel (1003) mithilfe eines Befestigungsmittels angeordnet ist, das eine Wärmeleitfähigkeit von mehr als 100 W.K⁻¹.m⁻¹, vorzugsweise mehr als 200 W.K⁻¹.m⁻¹ aufweist.

13. Automatisches System zum Messen geometrischer Krümmungsabweichungen zwischen den gebogenen Oberflächen (1001a) einer Vielzahl von zu bewertenden Materialien (1002) und einer gebogenen Oberfläche (1001a) eines Referenzmaterials (1001) nach einem der Ansprüche 11 bis 12, so dass das automatische Verschiebungsmittel (1003) ein automatischer Gelenkarm ist, der über sechs Freiheitsgrade verfügt.

14. Automatisches System zum Messen geometrischer Krümmungsabweichungen zwischen den gebogenen Oberflächen (1001a) einer Vielzahl von zu bewertenden Materialien (1001) und einer gebogenen Oberfläche (1001a) eines Referenzmaterials (1001) nach einem der Ansprüche 11 bis 13, so dass es ferner einen Träger für die Bewertungsmaterialien (1001) und das Referenzmaterial (1001) umfasst, so dass die gebogenen Oberflächen (1001a) der Bewertungsmaterialien (1001) und des Referenzmaterials (1001) in Neigungswinkeln räumlich ausgerichtet sind, die denjenigen entsprechen, die während ihrer Verwendung wahrscheinlich zu erwarten sind.

## Claims

1. An automated method (1000) for measuring geometric curvature deviations between the dished surfaces (1001a) of a plurality of materials (1001) to be assessed and a dished surface of a reference material (1001), the reference materials (1001) and the assessment material (1001) being, respectively, a reference sheet of glass and assessment sheets of glass, said method comprising the following steps:
(a) the measurement, at selected measurement points along a defined trajectory (1001b), of the curvature profile of the dished surface (1001a) of the reference material (1001) using a contactless detection means (1002), said contactless detection means (1002) being disposed on an automatic displacement means (1003) travelling along said trajectory synchronously with the measurement of the curvature profile by the contactless detection means (1002);
(b) the measurement of the curvature profile of the dished surface (1001a) of each material (1001) to be assessed, at the same selected measurement points along the same trajectory (1001b), in the same conditions of travel along the said trajectory (1001b) by the automatic displacement means (1003) and according to the same angle of acquisition by the contactless detection means (1002) at the same measurement point as for the dished surface (1001a) of the reference material (1001) during the step (a);
(c) the calculation, implemented by computer, at the selected points, of the difference between the curvature profiles of the dished surface (1001a) of each material (1001) to be assessed obtained in the step (b) and the curvature profile of the dished surface (1001a) of the reference material (1001) obtained in the step (a).

2. The automated method for measuring geometric deviations of curvature between the dished surfaces (1001a) of a plurality of materials (1001) to be assessed and a dished surface (1001a) of a reference material (1001) as claimed in claim 1, such that it further comprises, after the step (c), a step (d) of comparison, at selected measurement points, of the values of the differences calculated during the step (c) with tolerance values previously defined at each of said points.

3. The automated method for measuring geometric curvature deviations between the dished surfaces (1001a) of a plurality of materials (1001) to be assessed and a dished surface (1001a) of a reference material (1001) as claimed in one of claims 1 and 2, such that it further comprises, before the step (a), a step (a') of calibration of the reproducibility of the spatial positionings of the assembly formed by the automatic displacement means (1003) and the contactless detection means (1002) in the space of the trajectory (1001a) likely to be travelled along in the step (a), said step (a') comprising the following substeps:
(a'1) the definition of a plurality of points of calibration of known spatial coordinates in a first reference frame of reference in the space of the trajectory (1001a) likely to be travelled along in the step (a);
(a'2) the acquisition by the assembly formed by the automatic displacement means (1003) and the contactless detection means (1002) of the spatial coordinates of said calibration points in the reference frame of reference of said assembly formed by the automatic displacement means (1003) and the contactless detection means (1002);
(a'3) the calculation, implemented by computer, of the statistical correlation function between the spatial coordinates obtained in the step (a'1) and the spatial coordinates obtained in the step (a'2);
(a'4) the implementation of the statistical correlation function in a device for controlling the movements of said assembly formed by the automatic displacement means (1003) and the contactless detection means (1002).

4. The automated method for measuring geometric curvature deviations between the dished surfaces (1001a) of a plurality of materials (1001) to be assessed and a dished surface (1001a) of a reference material (1001) as claimed in claim 3, such that the calculation of statistical correlation function is performed using a least squares regression method.

5. Automated method for measuring geometric curvature deviations between the dished surfaces (1001a) of a plurality of materials (1001) to be assessed and a dished surface (1001a) of a reference material (1001) as claimed in one of claims 1 to 4, such that the steps (b) and (c) are executed successively and continually on the dished surfaces of the materials.

6. Automated method for measuring geometric curvature deviations between the dished surfaces (1001a) of a plurality of materials (1001) to be assessed and a dished surface (1001a) of a reference material (1001) as claimed in one of claims 1 to 5, such that the trajectory (1001b) is defined using a digital model of the reference dished surface.

7. The automated method for measuring geometric curvature deviations between the dished surfaces (1001a) of a plurality of materials (1001) to be assessed and a dished surface (1001a) of a reference material (1001) as claimed in one of claims 1 to 6, such that the dished surfaces (1001a) of the assessment materials (1001) and of the reference material (1001) are spatially oriented according to angles of inclination corresponding to those likely to be provided during their use.

8. The automated method for measuring geometric curvature deviations between the dished surfaces (1001a) of a plurality of materials (1001) to be assessed and a dished surface (1001a) of a reference material (1001) as claimed in one of claims 1 to 7, such that the contactless detection means (1002) is a chromatic confocal sensor.

9. The automated method for measuring geometric curvature deviations between the dished surfaces (1001a) of a plurality of materials (1001) to be assessed and a dished surface (1001a) of a reference material (1001) as claimed in one of claims 1 to 8, such that the automatic displacement means (1003) is an articulated automaton arm provided with six degrees of freedom.

10. The automated method for measuring geometric curvature deviations between the dished surfaces (1001a) of a plurality of materials (1001) to be assessed and a dished surface (1001a) of a reference material (1001) as claimed in claim 1, such that the reference sheet of glass and the assessment sheets of glass are likely to form glass sheets of a reference glazing for a transportation means and assessment glazings for the same transportation means respectively.

11. An automatic system for measuring geometric curvature deviations between the dished surfaces (1001a) of a plurality of materials (1001) to be assessed and a dished surface (1001a) of a reference material (1001), the reference materials (1001) and the assessment material (1001) being, respectively, a reference sheet of glass and assessment sheets of glass, said system comprising an assembly formed by
- at least one automatic displacement means (1003) adapted to travel along at least one trajectory (1001b) defined along dished surfaces (1001a), and
- at least one contactless detection means (1002) adapted to measure the curvature of dished surfaces (1001a), disposed on the automatic displacement means (1003) and synchronized with the movements of said automatic displacement means (1003), the contactless detection means (1002) being a chromatic confocal sensor ;
said system being configured to:
- measure, at selected measurement points along a defined trajectory (1001b), the curvature profile of the dished surface (1001) of the reference material, and
- measure the curvature profile of the dished surface (1001a) of each material (1001) to be assessed, at the same selected measurement points along the same trajectory (1001b), in the same conditions of travel along said trajectory (1001b) by the automatic displacement means (1003) and according to the same angle of acquisition by the contactless detection means (1002) at the same measurement point as for the dished surface (1001a) of the reference material (1001),
the system further comprising a computation unit configured to calculate, at the selected points, the difference between the relief height or curvature profiles of the dished surfaces (1001a) of each assessment material (1001) and the relief height or curvature profile of the dished surface (1001a) of the reference material.

12. The automatic system for measuring geometric curvature deviations between the dished surfaces (1001a) of a plurality of materials (1001) to be assessed and a dished surface (1001a) of a reference material as claimed in claim 11, such that the contactless detection means (1002) is disposed on the automatic displacement means (1003) using a fixing means having a thermal conductivity greater than 100 W.K⁻¹.m⁻¹, preferably greater than 200 W.K⁻¹.m⁻¹.

13. The automatic system for measuring geometric curvature deviations between the dished surfaces (1001a) of a plurality of materials (1002) to be assessed and a dished surface (1001a) of a reference material (1001) as claimed in any one of claims 11 to 12, such that the automatic displacement means (1003) is an articulated automaton arm provided with six degrees of freedom.

14. The automatic system for measuring geometric relief or curvature deviations between the dished surfaces (1001a) of a plurality of materials (1001) to be assessed and a dished surface (1001a) of a reference material (1001) as claimed in any one of claims 11 to 13, such that it further comprises a support for the assessment materials (1001) and for the reference material (1001) such that the dished surfaces (1001a) of the assessment materials (1001) and of the reference material (1001) are spatially oriented according to angles of inclination corresponding to those likely to be provided during their use.
